# EUROPEAN PATENT SPECIFICATION

(11) **EP 2 228 949 B1**
(45) Date of publication and mention of the grant of the patent: **25.12.2013**
(21) Application number: 09701602.6
(22) Date of filing: 07.01.2009
(51) Int. Cl.: H04L 12/701

(54) **METHOD, PATH COMPUTATION ELEMENT AND SYSTEM FOR OBTAINING PATH**
VERFAHREN, PFADBERECHNUNGSELEMENT UND SYSTEM ZUR ERMITTLUNG VON PFADINFORMATIONEN
PROCÉDÉ, ÉLÉMENT DE CALCUL DE TRAJECTOIRE ET SYSTÈME D'OBTENTION DE TRAJECTOIRE

(30) Priority: 07.01.2008 CN 200810002521
(43) Date of publication of application: 15.09.2010
(73) Proprietor: Huawei Technologies Co., Ltd., Longgang District, Shenzhen Guangdong 518129 (CN)
(72) Inventor: WU, Chuanjun c/o Huawei Technologies Co.Ltd., Int.Prop.Dept., Longgang District 518129, Shenzhen (CN); ZI, Xiaobing c/o Huawei Technologies Co.Ltd., Int.Prop.Dept., Longgang District 518129, Shenzhen (CN); LIU, Xinchao c/o Huawei Technologies Co.Ltd., Int.Prop.Dept., Longgang District 518129, Shenzhen (CN)
(74) Representative: Pfenning, Meinig & Partner GbR
(86) International application number: PCT/CN2009/070056
(87) International publication number: WO 2009/089778

(56) References cited:
- EP-A2- 1 844 563
- CN-A- 1 705 292
- CN-A- 1 710 868
- US-A1- 2006 039 391
- US-A1- 2006 171 320
- OKI NTT A FARREL OLD DOG CONSULTING E: "Extensions to the Path Computation Element Communication Protocol (PCEP) for Route Exclusions; draft-ietf-pce-pcep-xro-02.txt", IETF STANDARD-WORKING-DRAFT, INTERNET ENGINEERING TASK FORCE, IETF, CH, vol. pce, no. 2, 1 September 2007 (2007-09-01), XP015051561, ISSN: 0000-0004
- JP VASSEUR ET AL: "A Per-domain path computation method for establishing Inter-domain Traffic Engineering (TE) Label Switched Paths (LSPs); draft-ietf-ccamp-inter-domain-pd-path-comp -06.txt", IETF STANDARD-WORKING-DRAFT, INTERNET ENGINEERING TASK FORCE, IETF, CH, vol. ccamp, no. 6, 16 November 2007 (2007-11-16), XP015053168, ISSN: 0000-0004
- J-L LE ROUX (EDITOR) FRANCE TELECOM: "PCE Communication Protocol (PCECP) specific requirements for Inter-Area (G)MPLS Traffic Engineering; draft-ietf-pce-pcecp-interare a-reqs-00.txt", IETF STANDARD-WORKING-DRAFT, INTERNET ENGINEERING TASK FORCE, IETF, CH, vol. pce, 1 December 2005 (2005-12-01), XP015042615, ISSN: 0000-0004

## Description

The present invention relates to the field of communication technology, and more particularly to a method for obtaining a path, a path computation element (PCE), and a path computation system.

### BACKGROUND OF THE INVENTION

In a connection-oriented network such as a multi-protocol label switching-traffic engineering (MPLS-TE) network and an optical network, client signals are all transmitted to destinations through connections pre-established in the network. Various methods can be employed to establish connections. For example, in the optical network, cross connection of each node in the path may be configured by a network administrator, or may be automatically configured through a signaling protocol. Such connections are normally referred to as label switching path (LSP).

In order to ensure the normal transmission of the client signals under a network fault, two LSPs are usually established for each client signal: one is applied for transmission under a normal situation, which can be referred to as a working LSP; and the other is for transmission under a network fault, which substitutes the working LSP to transmit the client signals and can be referred to as a back-up LSP. In order to realize the aforementioned function, the two LSPs are required to satisfy a certain separating condition, such as node-separation and link-separation. In this manner, under the fault of a certain node or link in the network, the two LSPs may not be invalidated at the same time, thereby ensuring the transmission of the client signals.

In a small-scale network, each node may collect the overall network topology through open the shortest path first with traffic engineering (OSPF-TE) equipment, store the collected topology in its own traffic engineering database (TED), and then compute to obtain two separated paths by using a separated path algorithm.

However, along with the boosting network scale, it has become unrealistic for each node to collect the overall network topology through the OSPF-TE equipment, since, in this way, a large sum of control bandwidth resources is consumed, and each node is required to be configured with a large-capacity memory to realize the TED as well as a high-performance processor to perform path computation. In the prior art, a common measure to be employed is: to divide a large network into a plurality of domains, configure a PCE for each domain, and assign the PCE to be in charge of the path computation of the corresponding domain. In this manner, when an LSP is to be established, the node firstly requests a computation path to the PCE in the domain that the node belongs to through a path computation element protocol (PCEP), the PCE computes a path and then returns the path to the node, and the node establishes the LSP by using the returned path information. If it is intended to obtain paths crossing a plurality of domains, interactive computation needs to be performed on the PCEs corresponding to these domains through the PCEP.

In the prior art, in order to obtain two separated cross-domain paths, a shortest path is firstly computed through the interaction of the PCEs, then the resources on the path are excluded from the TED, and another path is re-computed. If the computation is successful, two paths that satisfy the separation constrains are obtained. For example, if it is intended to compute two node-separated paths, the node that the path passes through is excluded; and if it is intended to compute two link-separated paths, the link that the path passes through is excluded.

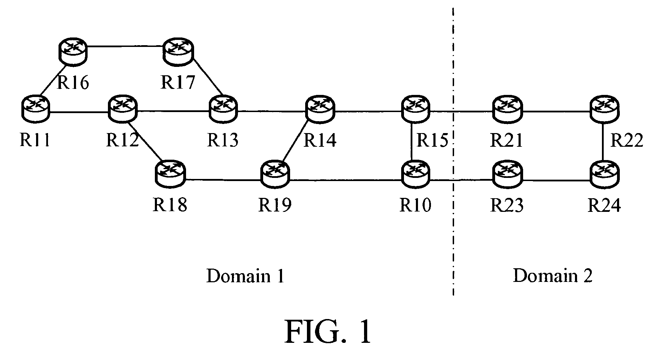

However, it has been become apparent that the aforementioned technical solution may cause a failure in the computation of the second path, when actually two separated paths exist. FIG. 1 is a schematic view of a network that is divided into two domains according to the prior art. Referring to FIG. 1, one network is divided into two domains, namely, Domain 1 and Domain 2, R10 and R15 are boundary nodes of Domain 1, R21 and R23 are boundary nodes of Domain 2; R15 is a PCE of Domain 1, and R21 is a PCE of Domain 2, which are respectively represented by PCE1 and PCE2. A connection line between every two nodes is one traffic engineering (TE) link, and the weight thereof is 1.

Hereinafter, with reference to FIG. 1, a method for obtaining two link-separated paths from a node R11 to a node R22 in the prior art is introduced.

Firstly, a first shortest path is obtained through the interaction between the PCE1 and the PCE2, which includes the following steps.
11. The PCE1 receives a path computation request message for computing a path of R11->R22.
12. The PCE1 finds that a destination node is not in Domain 1, and sends the path computation request message to the PCE2 through the PCEP.
13. The PCE2 finds that the destination node is in Domain 2, then computes a path from the boundary node in Domain 2 to the destination node so as to obtain two paths, that is, (R21, R22) and (R23, R24, R22), and returns path information about the two paths to the PCE1 by using the PCEP.
14. A shortest path of R11->R22 obtained by the PCE1 through a constrained shortest path first (CSPF) algorithm according to the returned path information and topology information about Domain 1 stored in a TED of the PCE1 is (R11, R12, R13, R14, R15, R21, R22).

After the first shortest path is obtained, the PCE1 starts to compute another path, which includes the following steps.
15. The PCE1 sends the path computation request message carrying the information about the first path to the PCE2 through the PCEP.
16. The PCE2 computes the path from the boundary node of Domain 2 to the destination node R22, and excludes the link that the first path passes through, that is, excludes the link R21->R22, so that only one path satisfies the requirement, which is (R23, R24, R22), and the PCE2 returns the path information about the path (R23, R24, R22) to the PCE1 through the PCEP.
17. After receiving the path information returned by the PCE2, the PCE1 computes a second path from the source node R11 to the destination node R22. Since the paths from the source node R11 to the boundary node in the same domain include: (R11, R12, R13, R14, R15), (R11, R12, R18, R19, R10), (R11, R12, R18, R19, R14, R15), (R11, R16, R17, R13, R14, R15), and (R11, R16, R17, R13, R14, R19, R10), which all pass through the link that the first path (R11, R12, R13, R14, R15, R21, R22) passes through, the second path cannot be obtained, that is, the computation of the two link-separated paths fails.

However, it can be directly seen from FIG. 1 that, R11->R22 includes two link-separated paths, that is, (R11, R12, R18, R19, R10, R23, R24, R22) and (R11, R16, R17, R13, R14, R15, R21, R22).

US 2006/039391 A1 discloses a flow chart describing steps of computing a path of an inter-AS MPLS Traffic Engineering LSP. At step 202, a path computation request is sent from the LSP head-end (which is acting as a path computation client) to the local path computation element. At step 204, the path computation request is passed to the path computation element in every AS on the way to the LSP tail-end. At step 206 N is set to the number of Autonomous Systems and an index variable n is set equal to N. At step 208, PCEn computes VSPTn. VSPTn is a shortest path tree rooted at the LSP tail-end and includes a path from this tail-end to every ASBR-en(k,n). Step 210 sends information specifying VSPTn from PCEn to PCEn-1. Step 212 decrements n. At step 214, PCEn concatenates the VSPT received from PCEn+1 with the topology of ASn. If step 216 determines that n=1, then at step 218, PCE1 concatenates the received VSPT2 to the topology of AS1, computes (using, e.g., CSPF) the shortest path based on the concatenated topology, and then sends information specifying the shortest path to the requesting head-end.

OKI NTT A FARREL. OLD DOG CONSULTING E: "Extensions to the Path Computation Element Communication Protocol (PCEP) for Route Exclusions; draft-ietf-pce-pcep -xro-02.txt", IETF STANDARD-WORKING-DRAFT, INTERNET ENGINEERING TASK FORCE,IETF, CN, vol. pce, no. 2, 1 September 2007 (2007-09-01) , XP015051561, ISSN:0000-0004 discloses the Path Computation Element (PCE) provides functions of path computation in support of traffic engineering in Multi-Protocol Label Switching (MPLS) and Generalized MPLS (GMPLS) networks. When a Path Computation Client (PCC) requests a PCE for a route, it may be useful for the PCC to specify, as constraints to the path computation, abstract nodes, resources, and Shared Risk Link Groups (SRLGs) that are to be explicitly excluded from the computed route. Such constraints are termed route exclusions. The PCE Communication Protocol (PCEP) is designed as a communication protocol between PCCs and PCEs. This document presents PCEP extensions for route exclusions.

### SUMMARY OF THE INVENTION

In order to solve the above technical problem, the present invention is directed to a method for obtaining a path, a PCE, and a path computation system, which are capable of enhancing the computation success rate of a cross-domain separated path under the circumstance that each PCE has no overall network topology.

Accordingly, the present invention is based on the following technical solutions.

According to a first aspect the present invention provides a method for obtaining a path, which includes the following steps.

At least two path computation domains between a path computation initial domain and a path computation termination domain perform interactive computation to obtain a path between two end nodes.
obtaining, by at least one of the path computation domains, path information about a first path and separated relationship information between a second path to be computed and the first path;
adjusting, by the at least one of the path computation domains, a traffic engineering database of the at least one of the path computation domains according to the path information about the first path and the separated relationship information between the second path to be computed and the first path;
computing, by the at least one of the path computation domains, path information for computing the second path according to the path information about the first path and the separated relationship information between the second path to be computed and the first path, wherein if the computation for a path from a certain boundary node to a destination node fails the generated path information for computing the second path comprises path information about a path between the certain boundary node and a boundary node that the first path passes through, the certain boundary node and a boundary node that the first path passes through connecting a previous path computation domain; and
sending, by the at least one of the path computation domains, the generated path information to a previous path computation domain.

According to a second aspect the present invention provides a path computation system, which includes a first path computation elements, PCE, and a second PCE adapted to perform interactive computation to obtain a path between two end nodes, the first PCE is a PCE of a first path computation domain, the second PCE is a PCE of a second path computation domain.
the first PCE, adapted to obtain path information about a first path, and separated relationship information between a second path to be computed and the first path, adjust a traffic engineering database of the first path computation domain according to the path information about the first path and the separated relationship information between the second path to be computed and the first path, compute and generate path information for computing the second path according to the path information about the first path and the separated relationship information between the second path to be computed and the first path, and send the generated path information to the second PCE, wherein if the computation for a path from a certain boundary node to a destination node fails the path information for computing the second path comprises path information about a path between the certain boundary node and a boundary node that the first path passes through, the certain boundary node and a boundary node that the first path passes through connecting the second path computation domain; and the second PCE, adapted to obtain the path information about the first path and the separated relationship information between the second path to be computed and the first path, compute the second path according to the obtained path information about the first path, the separated relationship information between the second path to be computed and the first path and the path information sent by the first PCE.

Based on the above, in the aforementioned technical solutions, a path between two end nodes is obtained by performing interactive computation on at least two PCEs corresponding to a node domain. Since the first PCE in the PCEs participating in the interactive computation may compute and generate the path information for computing the second path according to the obtained information about the first path, and the path information for computing the second path includes path information about the boundary node of the node domain that the first PCE belongs to and the boundary node of the node domain that the first path at the boundary node side passes through, the problem of failing to compute the actually existing separated path caused by excluding the path that the first path passes through can be avoided. By using such a pitfall avoiding algorithm, the computation success rate of the cross-domain separated path is raised, so as to enable the user to obtain the cross-domain separated path to a greater extent and enhance the reliability of the system.

### BRIEF DESCRIPTION OF THE DRAWINGS

FIG. 1 is a schematic view of a network that is divided into two domains according to the prior art;
FIG. 2 is a flow chart of a method for obtaining a cross-domain separated path according to an embodiment of the present invention;
FIG. 3 is a schematic view of a to-be-node-separated path according to an embodiment of the present invention;
FIG. 4 is a schematic view of a network in a first preferred embodiment of a method for obtaining a cross-domain separated path according to an embodiment of the present invention;
FIG. 5 is a schematic view of a network in a second preferred embodiment of the method for obtaining the cross-domain separated path according to an embodiment of the present invention;
FIG. 6 is a schematic view of an extended RP object data format according to an embodiment of the present invention;
FIG. 7A is a schematic view of a network in a third preferred embodiment of the method for obtaining the cross-domain separated path according to an embodiment of the present invention;
FIG. 7B is a schematic view of a network after a TED is adjusted in the third preferred embodiment of the method for obtaining the cross-domain separated path according to an embodiment of the present invention;
FIG. 8 is a schematic structural view of a first preferred embodiment of a PCE according to an embodiment of the present invention; and
FIG. 9 is a schematic structural view of a second preferred embodiment of the PCE according to an embodiment of the present invention.

### DETAILED DESCRIPTION OF THE EMBODIMENTS

In the following embodiments, the present invention provides a method for obtaining a path, a PCE, and a path computation system, which can obtain an actually existing cross-domain separated path through the interaction of the PCEs under the circumstance that each PCE has no overall network topology, so as to enhance the computation success rate of the cross-domain separated path.

The embodiments of the present invention are realized through a plurality of path computation domains, that is, at least two path computation domains between a path computation initial domain and a path computation termination domain perform interactive computation to obtain a path between two end nodes. At least one of the path computation domains obtains path information about a first path, computes and generates path information for computing a second path according to the obtained path information about the first path, and sends the generated path information to a next path computation domain. The path information for computing the second path includes path information about a path between two boundary nodes, and one of the boundary nodes is a node that the first path passes through. In this manner, a first PCE provides enough path resources for a second PCE, so as to avoid the problem of failing to compute the actually existing separated path caused by excluding the path the first path passes, and raise the computation success rate of the cross-domain separated path, thereby enabling the user to obtain the cross-domain separated path to a greater extent, enhancing the reliability of the system, and eliminating the path pitfall problem. Herein, such a method is referred to as a pitfall avoiding algorithm. Among the terms in the embodiment of the present invention, the path computation domain and the node domain express the same meaning.

The path computation initial domain in the context indicates a path computation domain that performs the computation first, which may be a path computation domain that a source node belongs to or a path computation domain that a destination node belongs to. The path computation termination domain indicates a finally computed path computation domain. If the path computation initial domain is the path computation domain that the source node belongs to, the path computation termination domain is the path computation domain that the destination node belongs to, and if the path computation initial domain is the path computation domain that the destination node belongs to, the path computation termination domain is the path computation domain that the source node belongs to. If an intermediate domain is required to cross the two end nodes, the intermediate domain is referred to as a path computation intermediate domain.

During the process of computing the path between the two end nodes, two circumstances may exist: one is that the path computation initial domain is adjacent to the path computation termination domain; and the other is that the path computation initial domain is not adjacent to the path computation termination domain. When the path computation initial domain is not adjacent to the path computation termination domain, the interactive computation may be performed in a recursive manner or a centralized manner.

The computation in the recursive manner includes the following steps. Each path computation domain participating in the recursive computation computes a path between the node domain that the path computation domain belongs to and the path computation initial domain, generates path information for the computation of a next path computation domain, and sends the generated path information to the next path computation domain, until the path computation termination domain obtains the path between the two end nodes through computation.

The computation in the centralized manner includes the following steps. Each PCE participating in the interactive computation computes a path associated with the path to be computed in the path computation domain that the PCE belongs to, generates path information for the computation of the path computation domain in charge of the centralized computation, and directly or indirectly sends the generated path information to the path computation domain in charge of the centralized computation. The path computation domain in charge of the centralized computation obtains the path information between the two end nodes through computation according to the path information from one or more path computation domains.

The aforementioned recursive manner and centralized manner are adapted to compute any path, that is to say, they can not only be adapted to compute the first path, but also adapted to compute the second path associated with the first path.

For each of the aforementioned path computation domains, the computation processing function may be executed by the corresponding PCE, or by a specialized node or a designated node in each path computation domain.

Each path computation domain may configure a corresponding computation manner according to relationship information between the path to be computed and the first path so as to satisfy service requirements, such as service priority and quality of service (QoS) guarantee. The relationship information may include at least one of the circumstances of whether being node-separated, link-separated, to-be-node-separated, and to-be-link-separated. The details may refer to the descriptions on specific application scenarios in the following.

When computing the second path, each of the aforementioned path computation domains needs to obtain the path information about the first path. If the path computation domain is the path computation termination domain, the path computation domain obtains the path information through its own computation; and if the path computation domain is not the path computation termination domain for computing the first path, but is the path computation initial domain or the path computation intermediate domain for computing the first path, the path computation termination domain for computing the first path computes the first path between the two end nodes, and then informs other path computation domains of the path information about the first path; or the path computation domain initiating the computation of the second path transmits the path information about the first path to the other path computation domains through a path request message; or the path computation domain carries the path information about the first path in the path information for computing the second path sent to the next path computation domain. It should be noted that, the path computation initial domain for computing the first path may be the same as or different from the path computation initial domain for computing the second path. For example, the path computation initial domain for computing the first path is the path computation domain that the source node belongs to, and the path computation initial domain for computing the second path is the path computation domain that the destination node belongs to.

In order to make the objectives, technical solutions, and advantages of the embodiments of the present invention more comprehensible, the embodiment of employing the recursive computation manner in the embodiments of the present invention is illustrated in detail below with the accompanying drawings.

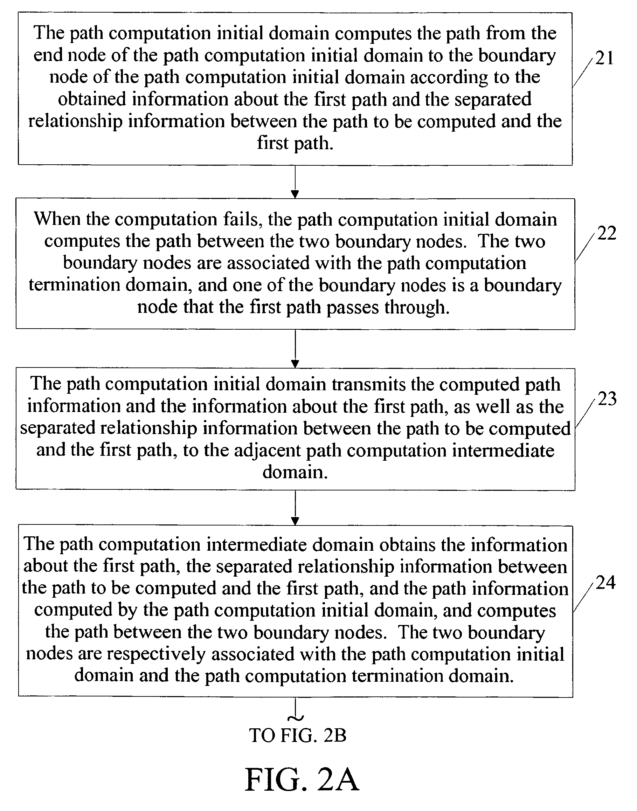

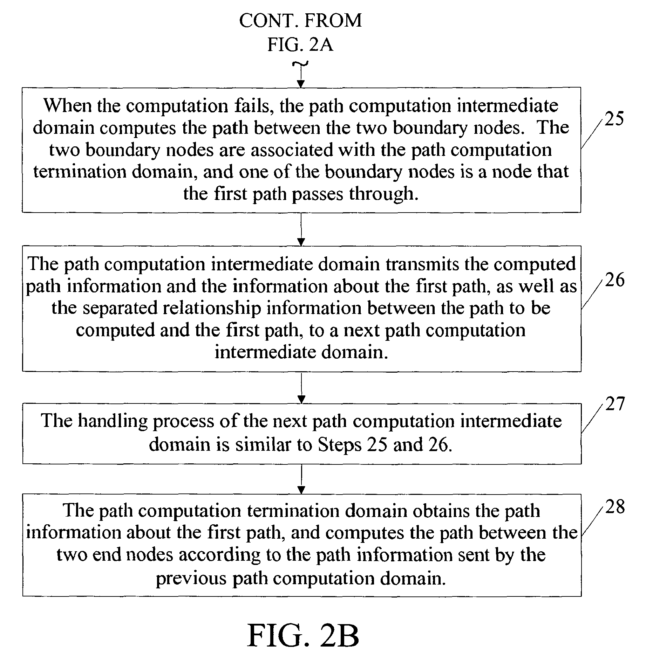

FIG. 2 is a flow chart of a method for obtaining a cross-domain separated path according to an embodiment of the present invention. A detailed description of the method is given below through specific steps.
21. The path computation initial domain obtains the path information about the first path, and computes the path from the end node of the path computation initial domain to the boundary node of the path computation initial domain according to the obtained information about the first path and the separated relationship information between the path to be computed and the first path. The aforementioned boundary node is associated with the path computation termination domain.

The path to be computed is associated with the first path, and the relationship includes whether being node-separated, link-separated, to-be-node-separated, or to-be-link-separated.

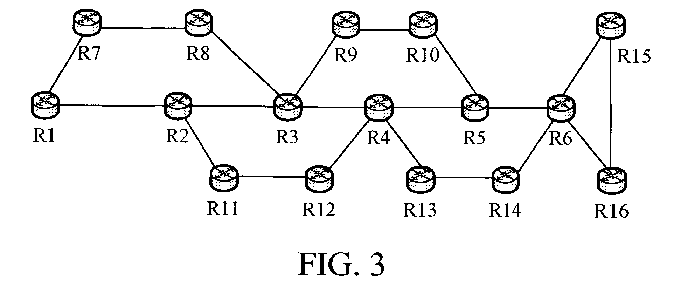

The to-be-node-separated relationship indicates that, among the nodes that a plurality of paths from the source node to the destination node passes through, the ones that can be separated are separated, and the ones that cannot be separated are separated to the maximum extent (that is, it is allowable to have a part of non-separated nodes). FIG. 3 is a schematic view of a to-be-node-separated path according to an embodiment of the present invention. The nodes R1-R15 do not have any completely node-separated path, but two to-be-node-separated paths can be obtained through computation, namely, R1-R7-R8-R3-R9-R10-R5-R6-R15 and R1-R2-R11-R12-R4-R13-R14-R6-R15, which both pass through the node R6.

The to-be-link-separated relationship indicates that, among the links that a plurality of paths from the source node to the destination node passes through, the ones that can be separated are separated, and the ones that cannot be separated are separated to the maximum extent (that is, it is allowable to have a part of non-separated links).

The separated relationship information between the path to be computed and the first path in the context may be not necessary, for example, when the system supports such a manner by default, or it can be determined according to parameters configured by the system. The to-be-node-separated or to-be-link-separated paths are computed to satisfy the user's requirements as much as possible, and improve the reliability of path transmission.
22. When the computation fails, the path computation initial domain computes the path between the two boundary nodes. The two boundary nodes are associated with the path computation termination domain, and one of the boundary nodes is a boundary node that the first path passes through. If a plurality of paths passes through the boundary node that the first path passes through, a plurality of paths between the two boundary nodes is generated.

If the path passing through the first node domain in the first path is completely excluded, the actually existing path may be excluded, and when the computation fails, the first end node domain computes the path from the boundary node of the first end node domain to the boundary node of the first end node domain that the first path passes through. Such a pitfall avoiding algorithm may be employed to ensure the computation of the actually existing path and raise the computation success rate.

In the context, the transmission is performed during the failure, so that the bandwidth can be saved. In practice, the system can compulsorily perform transmission no matter whether the computation fails or not. In this manner, the reliability of computation is improved, and more requirements can be satisfied.
23. The path computation initial domain transmits the computed path information and the information about the first path, as well as the separated relationship information between the path to be computed and the first path, to the adjacent path computation intermediate domain. If the path computation initial domain is adjacent to the path computation termination domain, the path information is directly transmitted to the path computation termination domain.
24. The path computation intermediate domain obtains the information about the first path, the separated relationship information between the path to be computed and the first path, and the path information computed by the path computation initial domain, and computes the path between the two boundary nodes. The two boundary nodes are respectively associated with the path computation initial domain and the path computation termination domain. If a plurality of paths between the aforementioned boundary nodes is associated with the path computation initial domain and the path computation termination domain, a plurality of paths between the two boundary nodes is generated.
25. When the computation fails, the path computation intermediate domain computes the path between the two boundary nodes. The two boundary nodes are associated with the path computation termination domain, and one of the boundary nodes is a node that the first path passes through. The two boundary nodes are associated with the path computation termination domain.
26. The path computation intermediate domain transmits the computed path information and the information about the first path, as well as the separated relationship information between the path to be computed and the first path, to a next path computation intermediate domain. If the next path computation domain is the path computation termination domain, a skip is made directly to Step 28, that is, the path computation termination domain computes the path between the two end nodes.
27. The handling process of the next path computation intermediate domain is similar to Steps 25 and 26, and the details thereof may not be repeated herein again.
28. The path computation termination domain obtains the path information about the first path, and computes the path between the two end nodes according to the path information sent by the previous path computation domain.

During the aforementioned process of computing a new path between the two end nodes, in order to ensure the transmission efficient of the path, the first path may be the shortest path, and the new path is the shortest path other than the first path.

Each domain may compute the path by different computation methods according to different separated relationship information. For example, the computing the link-separated or to-be-link-separated cross-domain separated paths includes: excluding a positive direction of a link that the first path in this domain passes through, and negating a weight in a negative direction; or increasing a weight in the positive direction of the link that the first path in this domain passes through, and negating the weight in the negative direction. Moreover, in order to obtain the node-separated cross-domain separated path, the aforementioned method further includes partitioning the node having a degree larger than 3 in the first path.

Hereinafter the embodiments of the present invention are illustrated in specific application scenarios.

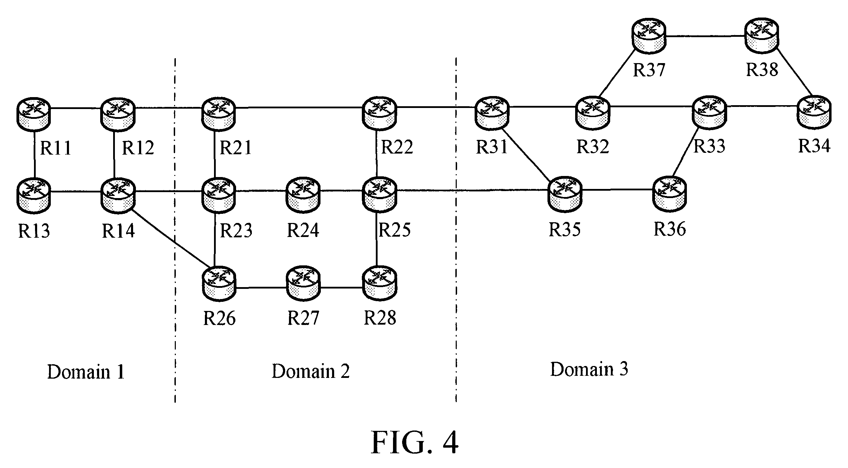

FIG. 4 is a schematic view of a network in a first preferred embodiment of a method for obtaining a cross-domain separated path according to an embodiment of the present invention. The network is constituted by three domains, namely, Domain 1, Domain 2, and Domain 3. In order to facilitate the computation, a link weight between every two links is set to 1, and the PCEs of the three domains are respectively PCE1, PCE2, and PCE3, which are respectively corresponding to R12, R22, and R31. It is assumed that the PCE31 receives a path computation request message, and two link-separated paths of R11->R34 are required to be computed. Hereinafter the method of realizing the cross-domain separated path according to the embodiment of the present invention is illustrated through specific steps.
41. A first path is computed.

In the embodiment of the present invention, various methods are provided for computing the first cross-domain path from the source node to the destination node. For example, the PCE in the destination node domain computes a path from the boundary node to the destination node in the destination node domain, and the PCE in the intermediate domain respectively computes the path between the boundary node of the domain that the PCE belongs to at the destination node side and the boundary node of the domain that the PCE belongs to at the source node side, and returns the paths to the PCE in the source node domain. The PCE in the source node domain computes the path from the source node to the destination node according to the returned computation result. Alternatively, the PCE in the destination node domain may also compute the path from the boundary node to the destination node in the destination node domain, and return the path to the PCE in the adjacent domain at the source node side. Meanwhile, the PCE in the intermediate domain computes the path from the boundary node in the intermediate domain at the source node side to the destination node, and sequentially returns the computation results to the PCE in the adjacent domain at the source node side. When the results are returned to the PCE in the source node domain, the PCE in the source node domain computes to obtain the path from the source node to the destination node according to the returned result.

Preferably, the method of backward recursive PCE-based computation (BRPC) may be employed, which obtains one cross-domain path through the interaction of multiple PCEs, so as to compute a path where a sum of the weights of the links that the path passes through is the minimum, that is, the shortest path.

Referring to FIG. 4, a domain sequence is designated as Domain 1->Domain 2->Domain 3, the three PCEs perform interactive computation on the first path, and the main process is given as follows.
411) The PCE1 sends a path computation request message to the PCE2 for computing a path of R11->R34.
412) The PCE2 finds that the destination node is in Domain 3, and forwards the path computation request message to PCE in Domain 3: R31, that is, the PCE3.
413) The PCE3 finds that the destination node is in the domain within its own charge, and computes the paths from the boundary node connected to the previous domain to the destination node according to the topology information in the TED of Domain 3, that is, the paths of R31->R34 and R35->R34. The computation results are (R31, R32, R33, R34) and (R35, R36, R33, R34), and the weights of the two paths are both 3. The PCE3 sends a path computation response message carrying the aforementioned information about the two paths to R22, where the R22 is a PCE in the previous domain.
414) The PCE2 receives the path computation response message, and finds that the source node of the path to be computed is not in Domain 2. Thereby, the PCE2 computes the path from the boundary node connected to the previous domain to the destination node, and respectively computes the paths of R21->R34, R23->34, and R26->R34 according to the topology information in the TED of Domain 2 and the path information returned by the PCE3. The computation results are (R21, R22, R31, R32, R33, R34), (R23, R21, R22, R31, R32, R33, R34), and (R26, R27, R28, R35, R36, R33, R34) respectively having the weights of 5, 6, and 6. The PCE2 sends a path computation response message carrying the aforementioned information about the three paths to R12, where the R12 is a PCE in the previous domain.
415) The PCE1 receives the path computation response message, and finds that the source node of the path to be computed is in Domain 1. Thereby, the PCE1 computes the path of R11->R34 according to the topology information in the TED of Domain 1 and the path information returned by the PCE2, and the computed path is (R11, R12, R21, R22, R31, R32, R33, R34) having a weight of 7.
42. After the computation of the first path, a second path starts to be computed, which includes the following steps.
421) The PCE1 sends a path computation request message to the PCE2 for computing a path of R11->R34, and carries the information about the first path and the separated relationship information between the path to be computed and the first path in the request message;

The separated relationship information between the path to be computed and the first path in the request message may, for example, indicate to be link-separated, node-separated, to-be-link-separated, or to-be-node-separated. In this embodiment, the separated relationship is designated to be link-separated.
422) The PCE2 finds that the destination node is in Domain 3, and forwards the path computation request message to PCE in Domain 3: R31.
423) The PCE3 finds that the destination node is in the domain within its own charge, computes the paths from the boundary node connected to the previous domain to the destination node, and returns a path response message to the PCE of the previous domain.

In this embodiment, the paths of R31->R34 and R35->R34 are respectively computed, and before the computation, the TED of this domain is adjusted and another path is computed according to the obtained information about the first path as well as the separated relationship information between the path to be computed and the first path. For example, a positive direction of a link that the first cross-domain path passes through is excluded, a weight in a negative direction is negated, the TED in this domain is adjusted, the topology information in the TED is adjusted, the path from the boundary node connected to the previous domain to the destination node is computed according to the adjusted topology information, and when the computation fails, the path from the boundary node to a boundary node that the first path passes through and connected to the previous domain is computed. As shown in FIG. 3, the link in the direction of R32->R33 is excluded, and the weight of the link in the direction of R33->R32 is -1. Since the link in the direction of R32->R33 is excluded, the computation for the path of R31->R34 fails. Moreover, since the boundary node R31 is on the first path, it is unnecessary to compute the path from the boundary node to the boundary node in this domain that the first path passes through. The computation result of the path of R35->R34 is (R35, R36, R32, R37, R38, R34) having a weight of 4. The PCE: R22 returning a path computation response message to the previous domain carries the path information about the R35->R34 in the message.
424) The PCE2 receives the path computation response message, and finds that the source node of the path to be computed is not in Domain 2. Thereby, the PCE2 computes the path from the boundary node connected to the previous domain to the destination node, and sends the path computation response message to the PCE of the previous domain: R12.

According to the obtained information about the first path and the separated relationship information between the path to be computed and the first path, a positive direction of a link that the first path passes through is excluded, a weight in a negative direction is negated, the TED of Domain 2 is adjusted, and the path from the boundary node connected to Domain 1 to the destination node is computed according to the adjusted TED of Domain 2 and the path information returned by the PCE3. The computation results are respectively (R21, R23, R24, R25, R35, R36, R33, R32, R37, R38, R34) having a weight of 8, and (R23, R24, R25, R35, R36, R32, R37, R38, R34) and (R26, R27, R28, R25, R35, R36, R33, R32, R37, R38, R34) both having a weight of 7. A path computation response message that carries the aforementioned information about the three paths is sent to R12, where the R12 is a PCE in the previous domain.
425) The PCE1 receives the path computation response message, and finds that the source node of the path to be computed is in Domain 1. Thereby, the PCE1 excludes a positive direction of a link that the first path passes through, negates a weight in a negative direction, adjusts the TED of Domain 1, computes the path from the boundary node to the source node of Domain 1 according to the adjusted TED of Domain 1, and when the computation fails, computes the path from the boundary node to the boundary node of Domain 1 that the first path passes through, so as to actually compute the path of R11->R14, that is, (R11, R13, R14). Afterward, the PCE1 computes the path of R11->R34 according to the path information returned by the PCE2, that is, (R11, R13, R14, R23, R24, R25, R35, R36, R33, R32, R37, R38, R34).
43. Optionally, it is determined whether the new path from the source node to the destination node has an overlapping part with the first path; and if yes, the overlapping part between the new path from the source node to the destination node and the first path is adjusted, so as to obtain the separated path.

If the two paths are found to have an overlapping link, that is, R32<->R33, the two paths are respectively adjusted to obtain two link-separated paths, that is, (R11, R13, R14, R23, R24, R25, R35, R36, R33, R34) and (R11, R12, R21, R22, R31, R32, R37, R38, R34).

It can be seen from this embodiment that, when the second path is computed, the link that the first path passes through is not completely excluded, but instead, a positive direction of a link overlapping with the first path is excluded according to the information about the first path and the link-separated relationship information between the path to be computed and the first path, and a weight in a negative direction is negated. Moreover, when the computation of a certain domain fails, the path from the boundary node in this domain at the source node side to the boundary node in this domain at the source node side that the first path passes through is computed, so that a new path is computed, and two link-separated paths are obtained. Therefore, as compared with the solution of excluding the link completely overlapping with the first path, the computation success rate of the cross-domain separated path is raised in this embodiment.

The circumstance where two or more intermediate domains are provided is substantially the same as the circumstance where one intermediate domain is provided, and the details thereof may not be repeated herein again.

Hereinafter specific applications are adopted to illustrate that, during the computation of the second path, when the computation for the path from the boundary node of a certain domain to the destination node of the first path fails, a method of computing the path from the boundary node at a certain side of this domain to the boundary node at the same side of this domain that the first path passes through may be employed, and the circumstance of computing the cross-domain separated path is described through the following embodiment.

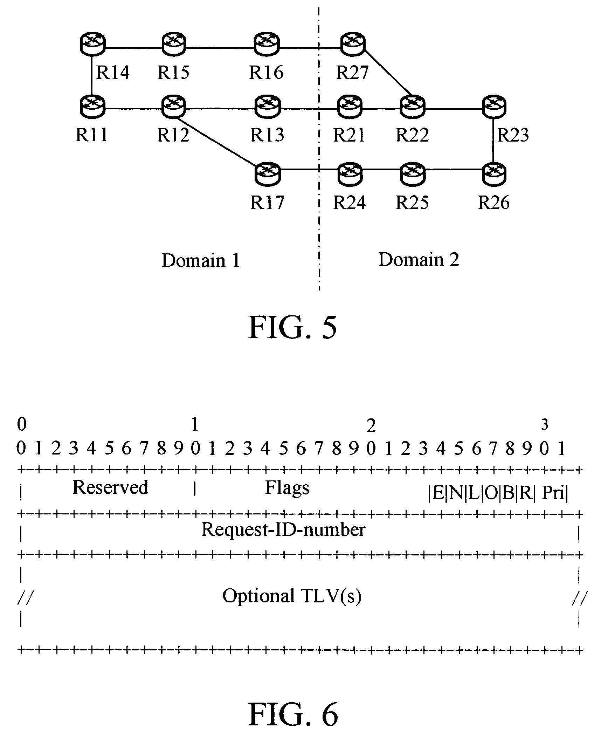

FIG. 5 is a schematic view of a network in a second preferred embodiment of the method for obtaining the cross-domain separated path according to an embodiment of the present invention. The network is constituted by two domains, namely, Domain 1 and Domain 2. In order to facilitate the computation, a weight of each node link is set to 1, and the PCEs of the two domains are respectively R12 (PCE1) and R21 (PCE2). It is assumed that the PCE1 receives a request message for computing two link-separated paths of R11->R23, which is illustrated below with specific steps.
51. A first path is computed. Similar to the previous embodiment, the BRPC algorithm is employed, a domain sequence is designated as Domain 1->Domain 2, and the two PCEs perform interactive computation on the first path to obtain a first shortest path, that is, (R11, R12, R13, R21, R22, R23) having a weight of 5.
52. A second path is computed.

Each PCE adjusts the TED in the domain that it belongs to according to the information about the first path and the separated relationship information between the path to be computed and the first path, and under the circumstance that the computation for the path from a certain boundary node to the destination node fails, computes the path from the boundary node to the boundary node at the same side of this domain that the first path passes through. The detailed process is introduced as follows.
521) The PCE1 sends a path computation request message to the PCE2 for computing the path of R11->R23, and carries the information about the first path and the relationship information between the path to be computed and the first path in the path computation request message, for example, a link-separated, node-separated, to-be-link-separated, or to-be-node-separated relationship. In this embodiment, the relationship is designated to be link-separated.

In specific implementations, a request parameters (RP) object in the current PCEP protocol is extended by adding three flag bits. FIG. 6 is a schematic view of an extended RP object data format according to an embodiment of the present invention, which includes:
N flag bit: 1 indicates being node-separated, and 0 indicates being unnecessary to be node-separated;
L flag bit: 1 indicates being link-separated, and 0 indicates being unnecessary to be link-separated; and
E flag bit: 1 indicates accepting the to-be-separated paths, and 0 indicates not accepting the to-be-separated paths.

The specific operations of accepting the to-be-separated paths are: if the paths that satisfy the separation condition exist, the separated paths are returned; otherwise, the closest separated paths are returned. The specific operations of not accepting the to-be-separated paths are: if the paths that satisfy the separation condition exist, the separated paths are returned; otherwise, a computation failure message is returned.

In this manner, when the second path is computed, a record route object (RRO) in the path computation request message carries the information about the first path, and the aforementioned flag bits are adapted to indicate the relationship between the second path to be computed and the first path, such as a node-separated or link-separated relationship. Thereby, the PCE of each domain may correspondingly adjust the respective TED according to the information about the first path, and computes the path.
522) The PCE2 finds that the destination node is in the domain within its own charge, computes the path from the boundary node connected to the previous domain to the destination node, and returns a path computation response message to the PCE of the previous domain.

In this embodiment, the paths of R27->R23, R21->R23, and R24->R23 are respectively computed.

Before the computation, the TED of this domain needs to be adjusted according to the information about the first path, which specifically includes: excluding a positive direction that the first link passes through and negating a weight in a negative direction. For example, the link in the direction of R21->R22 is excluded, and the weight of the link in the direction of R22->R21 is -1. The computation result of the path of R24->R23 is (R24, R25, R26, R23) having a weight of 3. Since the link in the direction of R21->R22 is excluded, the computation for the path of R21->R23 fails, and as the boundary node R21 itself is on the first path, it is unnecessary to compute the path from the boundary node to the boundary node in the first path. Moreover, since the link of R22->R23 is excluded, the computation for the path of R27->R23 fails, and it is necessary to compute the path from the boundary node to the boundary node in this domain that the first path passes through, that is, the path of R27->R21, and the result is (R27, R22, R21) having a weight of 0.

The PCE: R13 sending a path computation response message to the previous domain carries the path information about the two successfully computed paths in the message, that is, (R24, R25, R26, R23) and (R27, R22, R21).
523) The PCE1 receives the path computation response message, and finds that the source node in the path to be computed is in Domain 1. Thereby, the PCE1 computes the path of R11->R23 according to the adjusted TED of Domain 1 and the path information returned by the PCE2, that is, (R11, R14, R15, R16, R27, R22, R21, R13, R12, R17, R24, R25, R26, R23) having a weight of 7.
53. Optionally, it is determined whether the path from the second source node to the destination node has an overlapping part with the first path; and if yes, the overlapping part between the path from the second source node to the destination node and the first path is adjusted, so as to obtain the separated cross-domain paths.

If the two paths are found to have an overlapping link, that is, R12<->R22, the two paths are respectively adjusted to obtain two link-separated paths, that is, (R11, R12, R17, R24, R25, R26, R23) and (R11, R14, R15, R16, R27, R22, R23).

It can be seen that, under the circumstance that the computation for the path from the boundary node to the destination node of a certain domain fails, the path from the boundary node to the boundary node at the same side of this domain that the first path passes through is computed to obtain the actually existing cross-domain separated path. Therefore, under the circumstance that the PCE of each domain has no overall network topology, the computation success rate of the cross-domain separated path is raised.

It can be understood that, the computation for the path from the boundary node of the end node domain to the end node and the computation for the path from the boundary node of the end node domain to the boundary node in the end node domain that the first path passes through may be conducted at the same time by the PCE of the end node domain where the source node or the destination node is located. The computation for the path from the boundary node at the source node side of the intermediate domain to the boundary node at the destination node side and the computation for the path from the boundary node of each domain at the source node side to the boundary node of the corresponding domain at the source node side the first path passes may also be conducted at the same time by the PCE of the intermediate domain, so as to obtain another path through computation and obtain the cross-domain separated path. Detailed descriptions may not be repeated herein again.

The above embodiment is illustrated by taking the method of realizing the cross-domain link-separated path as an example, but the cross-domain node-separated path may also be realized, which is described below through a specific embodiment.

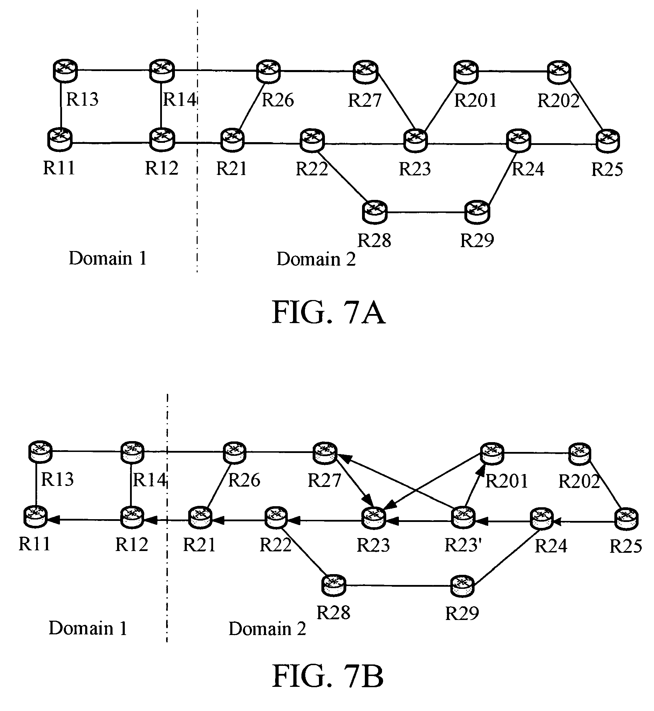

FIG. 7A is a schematic view of a network in a third preferred embodiment of the method for obtaining the cross-domain separated path according to an embodiment of the present invention. The network is constituted by two domains, namely, Domain 1 and Domain 2. In order to facilitate the computation, a link weight between every two node links is set to 1, and the PCEs of the two domains are respectively PCE1 and PCE2, which are respectively corresponding to R13 and R202. It is assumed that the PCE1 receives a path computation request message, and two link-separated paths of R11->R25 are requested to be computed. Hereinafter the method of realizing the cross-domain separated path according to the embodiment of the present invention is illustrated through specific steps.
71. A first path is computed.

Various methods may be employed for computing the first path. For example, a BRPC method is employed, in which a domain sequence is designated as Domain 1->Domain 2, and the two PCEs perform interactive computation to obtain a shortest path, that is, (R11, R12, R21, R22, R23, R24, R25) having a weight of 6. The specific steps are similar to those of computing the first path in the process of computing the link-separated path, so the details may not be repeated herein again.
72. After the first path is computed, the second path starts to be computed. Each PCE adjusts the TED of its domain according to the information about the first path and the separated relationship information between the path to be computed and the first path, and under the circumstance that the computation for the path from a certain boundary node to the destination node fails, computes the path from the boundary node to a boundary node at the same side of this domain that the first path passes through. The detailed process is introduced as follows.
721) The PCE1 sends a path computation request message to the PCE2 for computing the path of R11->R25, and carries the information about the first path and the separated relationship information between the path to be computed and the first path in the request message.

The separated relationship information between the path to be computed and the first path may be link-separated, node-separated, to-be-link-separated, or to-be-node-separated. In this embodiment, the relationship is designated to be link-separated.
722) The PCE2 finds that the destination node is in the domain within its own charge, computes the path from the boundary node connected to the previous domain to the destination node, and returns a path response message to the PCE of the previous domain.

In this embodiment, the paths of R21->R25 and R26->R25 are respectively computed. Before the computation, the TED of this domain may be adjusted according to the information about the first path and the separated relationship information between the path to be computed and the first path. Specifically, a positive direction of a link that the first path passes through is excluded, a weight in a negative direction is negated, and the node having a degree larger than 3 in the path is partitioned into two nodes. FIG. 7B is a schematic view of a network after a TED is adjusted in the third preferred embodiment of the method for obtaining the cross-domain separated path according to an embodiment of the present invention. For example, the link in the direction of R21->R22 is excluded, the weight of the link in the direction of R22->R21 is -1, and the node R23 is partitioned into R23 and R23'. The computation result of the path of R21->R25 is (R21, R26, R27, R23, R22, R28, R29, R24, R23', R201, R202, R25) having a weight of 8. The computation result of the path of R26->R25 is (R26, R27, R23, R22, R28, R29, R24, R23', R201, R202, R25) having a weight of 7.

The PCE2 returns a path response message carrying the information about the two successfully computed paths to a PCE in the previous domain, where the PCE in the previous domain is R13 .
723) The PCE1 receives the aforementioned path computation response message, and finds that the source node of the path to be computed is in Domain 1. Thereby, the PCE1 computes the path of R11->R25 according to the adjusted TED in Domain 1 and the path information returned by the PCE2, that is, (R11, R13, R14, R26, R27, R23, R22, R28, R29, R24, R23', R201, R202, R25) having a weight of 10.
73. Optionally, it is determined whether the path from the second source node to the destination node obtained through the computation in Step 72 has an overlapping part with the first path; and if yes, the overlapping part between the path from the source node to the destination node obtained in Step 72 and the first path is adjusted, so as to obtain the separated path.
731) The PCE1 obtains the following two paths:
   (R11, R12, R21, R22, R23, R24, R25); and
   (R11, R13, R14, R26, R27, R23, R22, R28, R29, R24, R23', R201, R202, R25).
732) The two paths have an overlapping link: R22<->R23, and the two paths are respectively adjusted to obtain two paths:
   (R11, R12, R21, R22, R28, R29, R24, R23, R201, R202, R25); and
   (R11, R13, R14, R26, R27, R23, R24, R25).
733) The two adjusted paths further have an overlapping link portion: R24<->R23, and the two paths are continuously adjusted to obtain two paths:
   (R11, R12, R21, R22, R28, R29, R24, R25); and
   (R11, R13, R14, R26, R27, R23, R201, R202, R25).

If the two paths have no overlapping link portion, it is unnecessary to adjust the two paths, such that two node-separated cross-domain paths are obtained.

The TED of each domain is adjusted according to the information about the first path as mentioned above in the manner of excluding a positive direction of a link that the first path passes through and negating a weight in a negative direction. It can be understood that, other implementation manners may also be employed. For example, the weight in the positive direction of the link that the first path passes through may be increased, and preferably, the weight in the positive direction of the link may be set far greater than the weight of the actual value in the positive direction of the link, for example, when the weights of other links are all smaller than 100, the weight in the positive direction of the link may be set to 10000. The specific configuration may be set according to actual strategies.

In each of the aforementioned embodiments, two cross-domain separated paths are obtained. It can be understood that, all the actually existing cross-domain separated paths may be obtained, the obtained three or more paths may be merely separated from the first path, or the path to be computed is separated from each of the previously obtained paths. Specific selections can be made according to the requirements of the system on the safety and reliability of the path.

In addition, it can be published in automatic discovery information about the PCE whether the PCE has the capability of realizing the method for obtaining the cross-domain separated path according to the embodiment of the present invention, that is, publishing the separated relationship information through an automatic discovery message. In this manner, the PCE having such a computation capability may be selected to obtain the cross-domain separated path.

When a different path is computed according to the information about the first path and the separated relationship information between the path to be computed and the first path, in addition to the aforementioned method in a recursive computation manner, the method in the manner of returning all the results obtained through the computation of the PCEs of each domain to one of the PCEs may also be adopted. The manner of returning to one of the PCEs in the end node domain specifically includes the following steps.

According to the obtained information about the first path and the separated relationship information between the path to be computed and the first path, the PCE of the first end node domain computes the path from the first end node to the boundary node of the first end node domain, and the path from the boundary node of the first end node domain to the boundary node of the first end node domain that the first path passes through, and transmits the computed path information and the information about the first path as well as the separated relationship information between the path to be computed and the first path to the PCE of the second end node domain.

The PCE of the second end node domain computes the path from the second end node to the boundary node of the second end node domain according to the information about the first path transmitted by the PCE of the first end node domain and the separated relationship information between the path to be computed and the first path, computes the path from the boundary node of the second end node domain to the boundary node of the second end node domain that the first path passes through, and computes a new path from the first end node to the second end node according to the path information computed by the first end node domain.

When the first end node is the source node, the second end node is the destination node; and when the first end node is the destination node, the second end node is the source node.

When the path from the first end node to the second end node crosses at least two domains, the PCE of each domain in the intermediate domain computes the path between the boundary node of the intermediate domain at the first end node side and the boundary node of the intermediate domain at the second end node side according to the information about the first path transmitted by the adjacent domain at the first end node side and the separated relationship information between the path to be computed and the first path, and the path from the boundary node of this intermediate domain at the first end node side to the boundary node of this intermediate domain at the first end node side that the first path passes through, and transmits the computed path information to the second end node domain. Meanwhile, the PCE of the second end node domain computes a new path from the first end node to the second end node according to the path information transmitted by the PCE of each domain in the intermediate domain, the path information transmitted by the first end node domain and computed by the PCE of the first end node domain, the information about the first path, and the separated relationship information between the path to be computed and the first path.

The separated relationship information between the path to be computed and the first path may be information indicating whether being node-separated, link-separated, to-be-node-separated, or to-be-node-separated.

Different computation methods may be employed according to different separated relationship information. For example, the computing the link-separated paths from the first end node to the second end node may include: excluding a positive direction of a link that the first path passes through, and negating a weight in a negative direction; or increasing a weight in the positive direction of the link that the first path passes through, and negating the weight in the negative direction. Moreover, in order to obtain the cross-domain node-separated path, the aforementioned method may include: excluding a positive direction of a link that the first path passes through, negating a weight in a negative direction, and partitioning the node having a degree larger than 3 in the first path; or increasing a weight in the positive direction of the link that the first path passes through, negating the weight in the negative direction, and partitioning the node having a degree larger than 3 in the first path.

In addition, when the computation for the new path from the first end node to the second end node fails, the PCE of the domain failing in the computation computes the path between the boundary node of the domain that the PCE belongs to and the boundary node at the same side of the domain that the PCE belongs to and that the first path passes through, and returns the path to the second end node. Meanwhile, the PCE of the second end node domain computes to obtain the new path from the first end node to the second end node according to the path information about the PCE of the domain failing in the computation, the information about the first path, and the separated relationship information between the path to be computed and the first path.

Preferably, in order to obtain the paths that are separated to the maximum extent, when it is determined that the path from another first end node to the second end node has an overlapping part with the first path, the overlapping part between the path from the another first end node to the second end node and the first path may be adjusted to enhance the reliability of the path to the maximum extent.

As described above, the method for obtaining the cross-domain separated path provided in the embodiment of the present invention is introduced in detail with the accompanying drawings. In order to make persons skilled in the art better understand and implement the present invention, the PCE provided in the embodiment of the present invention is illustrated in detail below with the accompanying drawings.

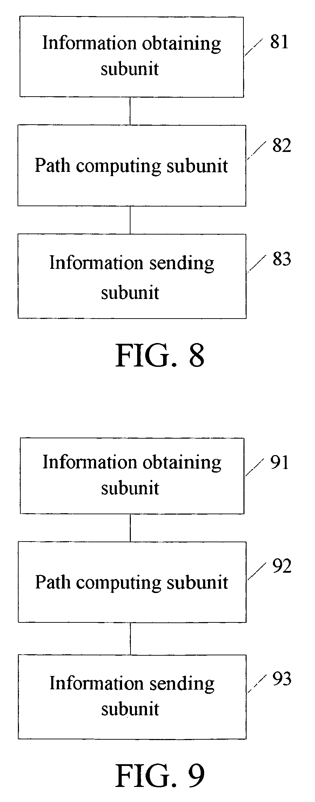

FIG. 8 is a schematic structural view of a first preferred embodiment of a PCE according to an embodiment of the present invention. The PCE includes: an information obtaining subunit 81, a path computing subunit 82, and an information sending subunit 83.

The information obtaining subunit 81 is adapted to obtain path information about a first path.

The information may be obtained from the PCE or information transmitted by other PCEs.

The information obtained by the information obtaining subunit 81 further includes the separated relationship information between the second path and the first path. The separated relationship information includes information indicating whether being separated or to-be-separated from the first path, and specifically includes node-separated, link-separated, to-be-node-separated, or to-be-link-separated relationships. Such a function enables the PCE to support the computation for the separated or to-be-separated paths.

The to-be-node-separated relationship indicates that, among the nodes that different paths from the source node to the destination node pass through, the ones that can be separated are separated, and the ones that cannot be separated are separated to the maximum extent (that is, it is allowable to have a part of non-separated nodes).

The to-be-link-separated relationship indicates that, among the links that different paths from the source node to the destination node pass through, the ones that can be separated are separated, and the ones that cannot be separated are separated to the maximum extent (that is, it is allowable to have a part of non-separated links).

The path computing subunit 82 is adapted to execute a function of path computation, and generate path information for computing a second path according to the path information about the first path. The generated path information for computing the second path includes path information about a path between two boundary nodes, and one of the boundary nodes is a node that the first path passes through. The two boundary nodes may be associated with a path computation termination domain.

The information sending subunit 83 is adapted to send out the generated path information for computing the second path.

The information sent by the information sending subunit 83 further includes the path information about the first path and/or the separated relationship information between the second path and the first path.

The PCE may perform interactive computation in cooperation with other PCEs to compute the path information about the path between the boundary node of the node domain that the PCE belongs to and the boundary node of the node domain that the PCE belongs to and that the first path passes through according to the obtained information about the first path, and compute actually existing separated paths by computing to-be-node-separated or to-be-link-separated paths, so as to raise the computation success rate of the separated paths, thereby satisfying the user's requirements as much as possible and improving the reliability of path transmission.

During the computation of the PCE, the computing the link-separated or to-be-link-separated cross-domain separated paths may include: excluding a positive direction of a link that the first path passes through, and negating a weight in a negative direction; or increasing a weight in the positive direction of the link that the first path passes through, and negating the weight in the negative direction.

For the node-separated or to-be-node-separated paths, the PCE may exclude a positive direction of a link that the first path passes through, negate a weight in a negative direction, and meanwhile partition the node having a degree larger than 3 in the first path; or increase a weight in the positive direction of the link that the first path passes through, negate the weight in the negative direction, and meanwhile partition the node having a degree larger than 3 in the first path.

The aforementioned PCE further includes an automatic discovery information sending subunit adapted to send automatic discovery information. It is identified in the automatic discovery information whether the PCE supports the function of obtaining the cross-domain separated path according to the separated relationship information with the first path obtained by the information obtaining subunit 81, so that the system can find the PCE supporting the method for obtaining the cross-domain separated path as introduced in the embodiment of the present invention according to the automatic discovery information and perform the aforementioned computation with the PCE. The PCE supports centralized computation or recursive computation.

FIG. 9 is a schematic structural view of a second preferred embodiment of the PCE according to an embodiment of the present invention. The PCE includes: an information obtaining subunit 91, a path computing subunit 92, and an information sending subunit 93.

The information obtaining subunit 91 is adapted to obtain path information about a first path and path information for computing a second path from other path computation domains. The path information for computing the second path includes path information about a path between two boundary nodes, the two boundary nodes are associated with a path computation termination domain, and one of the boundary nodes is a node that the first path passes through.

The path computing subunit 92 is adapted to further compute the path information for computing the second path according to the obtained path information about the first path and the obtained path information for computing the second path.

The information sending subunit 93 is adapted to send the path information obtained through computation by the path computing subunit 92 to the other path computation domains.

The PCE in an intermediate domain is adapted to compute the path between the boundary node of the domain that the PCE belongs to and the boundary node of the domain that the PCE belongs to at the boundary node side that the first path passes through according to the information about the first path. The PCE supports centralized computation or recursive computation. The PCE is employed to perform interactive computation in cooperation with other PCEs, so as to compute the actually existing separated path and raise the computation success rate of the separated path.

According to the embodiment of the present invention, the PCE in the path computation termination domain includes an information obtaining subunit, a path computing subunit, and an adjusting subunit.

The information obtaining subunit is adapted to obtain path information about a first path and path information for computing a second path from other path computation domains. The path information for computing the second path includes path information about a path between two boundary nodes, one of the boundary nodes is a node that the first path passes through, and the two boundary nodes are associated with the path computation termination domain.

The path computing subunit is adapted to compute the second path according to the obtained path information about the first path and the path information for computing the second path.

The adjusting subunit is adapted to adjust the path information about the first path and the second path, so as to obtain two separated or to-be-separated paths.

The PCE in the path computation termination domain has optional units. The PCE supports centralized computation or recursive computation. The PCE is employed to perform interactive computation in cooperation with other PCEs, so as to compute the actually existing separated path and raise the computation success rate of the separated path.

In order to enable persons skilled in the art to better understand and implement the embodiment of the present invention, detailed descriptions on a path computation system provided by an embodiment of the present invention are given below from another aspect.

Correspondingly to the method provided in the embodiment of the present invention, the path computation system provided by the present invention includes at least two PCEs adapted to perform interactive computation to obtain a path between two nodes. The system at least includes a first PCE and a second PCE.

The first PCE is adapted to obtain path information about a first path, compute and generate path information for computing a second path according to the obtained path information about the first path, and send the generated path information to the second PCE. The path information for computing the second path includes path information about a path between two boundary nodes, the two boundary nodes are associated with a node domain that the second PCE belongs to, and one of the boundary nodes is a node that the first path passes through.

The second PCE is adapted to obtain the path information about the first path, and compute according to the obtained path information about the first path and the path information sent by the first PCE.

When the second PCE is a PCE in a path computation termination domain, the second PCE obtains the path between the two end nodes through computation.

When the second PCE is a PCE in a path computation intermediate domain, the second PCE further computes, and sends a computation result to the next PCE.

When the two end nodes belong to non-adjacent path computation domains, the PCE participating in the interactive computation performs the computation in a recursive manner or in a centralized manner. The PCE corresponding to different algorithms performed by the system is illustrated as follows.

When the PCEs perform a recursive computation, the PCE of a non-terminal path computation domain participating in the recursive computation in the PCEs computes the path between the boundary node connected to the domain that the next PCE participating in the recursive computation belongs to in the domain that the PCE belongs to and the end node of the path computation initial domain according to the obtained path information about the first path, and sends the path information obtained through computation to the next path computation domain participating in the recursive computation. The PCE of the path computation termination domain participating in the recursive computation in the PCEs computes the path between the two end nodes according to the path information sent by the previous PCE. If necessary, the PCE of the path computation termination domain adjusts the path information about the two paths obtained through computation, so as to obtain two separated or to-be-separated paths.

When the path computation system performs a centralized computation, one of the PCEs in charge of the centralized computation receives the path information sent by other PCEs, and computes the path between the two end nodes.

The path information sent by the other PCEs includes the following contents.

When the PCE is in an end node domain, the path information is the path information about the path from the boundary node of the end node domain to the end node.

When the PCE is in an intermediate domain, the path information is the path information about the path between a first boundary node and a second boundary node of the intermediate domain associated with two end node domains respectively.

It can be understood that, the aforementioned PCE may be further optimized according to actual requirements. For example, an automatic discovery information sending subunit may be provided for the PCE to send automatic discovery information. It is identified in the automatic discovery information whether the PCE supports the function of obtaining the cross-domain separated path according to the separated relationship information with the first path carried in the information received by the message receiving unit 81.

Persons of ordinary skill in the art may understand that all or a part of the steps for realizing the method in the above embodiment may be accomplished by relevant hardware instructed by a program. The program may be stored in a computer readable storage medium, and implements the following steps when being executed.

The program performs path information interaction with other PCEs, obtains path information about a first path, computes and generates path information for computing a second path according to the obtained path information about the first path, and sends the generated path information to the other PCEs. The path information for computing the second path includes path information about a path between two boundary nodes, and one of the boundary nodes is a node that the first path passes through.

The aforementioned storage medium may be a ROM, a magnetic disc, or an optical disc.

Detailed descriptions of a method for obtaining a cross-domain separated path, a PCE, and a path computation system are provided above in the present invention. Persons of ordinary skill in the art can make variations and modifications to the present invention in terms of the specific implementations and application scopes according to the ideas of the present invention. Therefore, the specification shall not be construed as limitations to the present invention.

## Claims

1. A method for obtaining a path, comprising:
performing, by at least two path computation domains between a path computation initial domain and a path computation termination domain, interactive computation to obtain a path between two end nodes, **characterized by**:
obtaining, by at least one of the path computation domains, path information about a first path and separated relationship information between a second path to be computed and the first path;
adjusting, by the at least one of the path computation domains, a traffic engineering database of the at least one of the path computation domains according to the path information about the first path and the separated relationship information between the second path to be computed and the first path;
computing, by the at least one of the path computation domains, path information for computing the second path according to the path information about the first path and the separated relationship information between the second path to be computed and the first path, wherein if the computation for a path from a certain boundary node to a destination node fails the generated path information for computing the second path comprises path information about a path between the certain boundary node and a boundary node that the first path passes through, the certain boundary node and a boundary node that the first path passes through connecting a previous path computation domain; and
sending, by the at least one of the path computation domains, the generated path information to a previous path computation domain.

2. The method for obtaining a path according to any one of claims 1, wherein, after obtaining the first path and the second path through the interactive computation, the method further comprises:
determining whether the first path and the second path have an overlapping part or not; and
if the first path and the second path have an overlapping part, adjusting the overlapping part of the first path and the second path, so as to obtain two separated or to-be-separated paths.

3. The method for obtaining a path according to any one of claims 1, wherein the first path is the shortest path, and the second path is the shortest path other than the first path.

4. The method according to claim 1, wherein the separated relationship information between the second path to be computed and the first path comprises:
whether the second path being node-separated, link-separated, to-be-node-separated, or to-be-link-separated with the first path.

5. The method for obtaining a path according to claim 4, wherein, when the separated relationship information between the second path to be computed and the first path comprises the second path is link-separated or to-be-link-separated with the first path, the adjusting the traffic engineering database of the at least one of the path computation domains specifically comprises:
excluding a positive direction of a link that the first path passes through, and negating a weight in a negative direction; or increasing a weight in the positive direction of the link that the first path passes through, and negating the weight in the negative direction of the link that the first path passes through.

6. The method for obtaining a path according to claim 4, wherein, when the separated relationship information between the second path to be computed and the first path comprises the second path is node-separated or to-be-node-separated with the first path, the adjusting the traffic engineering database of the at least one of the path computation domains specifically comprises:
excluding a positive direction of a link that the first path passes through, negating a weight in a negative direction, and partitioning a node having a degree larger than 3 in the first path; or increasing a weight in the positive direction of the link that the first path passes through, negating the weight in the negative direction of the link that the first path passes through, and partitioning the node having a degree larger than 3 in the first path.

7. The method for obtaining a path according to claim 1, wherein the path information about the first path obtained by the path computation domain participating in the interactive computation is realized through at least one of the following manners:
if the path computation domain is not the path computation termination domain, the path computation termination domain computes the first path between the two end nodes, and then notifies other path computation domains of the path information about the first path; or the path computation domain initiating the computation of the second path carries the path information about the first path in a path request message to be sent to other path computation domains; or the path computation domain carries the path information about the first path in the path information for computing the second path sent to the next path computation domain; and
if the path computation domain is the path computation termination domain, the path computation domain obtains the information through its own computation.

8. A path computation system, comprising at least a first path computation elements, PCE, and a second PCE adapted to perform interactive computation to obtain a path between two end nodes, the first PCE is a PCE of a first path computation domain, the second PCE is a PCE of a second path computation domain, the system **characterized by**:
the first PCE, adapted to obtain path information about a first path and separated relationship information between a second path to be computed and the first path, adjust a traffic engineering database of the first path computation domain according to the path information about the first path and the separated relationship information between the second path to be computed and the first path, compute and generate path information for computing the second path according to the path information about the first path and the separated relationship information between the second path to be computed and the first path, and send the generated path information to a second PCE, wherein if the computation for a path from a certain boundary node to a destination node fails the path information for computing the second path comprises path information about a path between the certain boundary node and a boundary node that the first path passes through, the certain boundary node and a boundary node that the first path passes through connecting the second path computation domain; and
the second PCE, adapted to obtain the path information about the first path and the separated relationship information between the second path to be computed and the first path, compute the second path according to the obtained path information about the first path, the separated relationship information between the second path to be computed and the first path and the path information sent by the first PCE.

## Patentansprüche

1. Verfahren zum Erhalten eines Pfads, das Folgendes umfasst:
Ausführen durch wenigstens zwei Pfadberechnungsdomänen zwischen einer Pfadberechnungsanfangsdomäne und einer Pfadberechnungsabschlussdomäne einer interaktiven Berechnung, um einen Pfad zwischen zwei Endknoten zu erhalten, **gekennzeichnet durch**:
Erhalten **durch** wenigstens eine der Pfadberechnungsdomänen von Pfadinformationen über einen ersten Pfad und von Informationen über eine getrennte Beziehung zwischen einem zu berechnenden zweiten Pfad und dem ersten Pfad;
Einstellen **durch** die wenigstens eine der Pfadberechnungsdomänen einer Verkehrstechnik-Datenbank der wenigstens einen der Pfadberechnungsdomänen in Übereinstimmung mit den Pfadinformationen über den ersten Pfad und den Informationen über eine getrennte Beziehung zwischen dem zu berechnenden zweiten Pfad und dem ersten Pfad;
Berechnen **durch** die wenigstens eine der Pfadberechnungsdomänen von Pfadinformationen zum Berechnen des zweiten Pfads in Übereinstimmung mit den Pfadinformationen über den ersten Pfad und den Informationen über eine getrennte Beziehung zwischen dem zu berechnenden zweiten Pfad und dem ersten Pfad, wobei dann, wenn die Berechnung für einen Pfad von einem bestimmten Grenzknoten zu einem Zielknoten scheitert, die erzeugten Pfadinformationen zum Berechnen des zweiten Pfads Pfadinformationen über einen Pfad zwischen dem bestimmten Grenzknoten und einem Grenzknoten, **durch** den der erste Pfad verläuft, enthalten, wobei der bestimmte Grenzknoten und ein Grenzknoten, **durch** den der erste Pfad verläuft, mit einer früheren Pfadberechnungsdomäne verbunden sind; und
Senden **durch** die wenigstens eine der Pfadberechnungsdomänen der erzeugten Pfadinformationen zu einer früheren Pfadberechnungsdomäne.

2. Verfahren zum Erhalten eines Pfads nach einem der Ansprüche 1, wobei nach dem Erhalten des ersten Pfads und des zweiten Pfads durch die interaktive Berechnung das Verfahren ferner Folgendes umfasst:
Bestimmen, ob der erste Pfad und der zweite Pfad einen überlappenden Teil haben oder nicht;
falls der erste Pfad und der zweite Pfad einen überlappenden Teil haben, Einstellen des überlappenden Teils des ersten Pfads und des zweiten Pfads, um zwei getrennte oder zu trennende Pfade zu erhalten.

3. Verfahren zum Erhalten eines Pfads nach einem der Ansprüche 1, wobei der erste Pfad der kürzeste Pfad ist und der zweite Pfad der von dem ersten Pfad verschiedene kürzeste Pfad ist.

4. Verfahren nach Anspruch 1, wobei die Informationen über eine getrennte Beziehung zwischen dem zu berechnenden zweiten Pfad und dem ersten Pfad Folgendes umfassen:
ob der zweite Pfad mit dem ersten Pfad in einer Beziehung getrennter Knoten, getrennter Verbindungen, zu trennender Knoten oder zu trennender Verbindungen steht.

5. Verfahren zum Erhalten eines Pfads nach Anspruch 4, wobei dann, wenn die Informationen über eine getrennte Beziehung zwischen dem zu berechnenden zweiten Pfad und dem ersten Pfad enthalten, dass die Verbindung zwischen dem zweiten Pfad und dem ersten Pfad getrennt oder zu trennen ist, das Einstellen der Verkehrstechnik-Datenbank der wenigstens einen der Pfadberechnungsdomänen spezifisch Folgendes umfasst:
Ausschließen einer positiven Richtung einer Verbindung, durch die der erste Pfad verläuft, und Negieren eines Gewichts in einer negativen Richtung; oder Erhöhen eines Gewichts in der positiven Richtung der Verbindung, durch die der erste Pfad verläuft, und Negieren des Gewichts in der negativen Richtung der Verbindung, durch die der erste Pfad verläuft.

6. Verfahren zum Erhalten eines Pfads nach Anspruch 4, wobei dann, wenn die Informationen über eine getrennte Beziehung zwischen dem zu berechnenden zweiten Pfad und dem ersten Pfad umfassen, dass der Knoten zwischen dem zweiten Pfad und dem ersten Pfad getrennt ist oder zu trennen ist, das Einstellen der Verkehrstechnik-Datenbank der wenigstens einen der Pfadberechnungsdomänen spezifisch Folgendes umfasst:
Ausschließen einer positiven Richtung einer Verbindung, durch die der erste Pfad verläuft, Negieren eines Gewichts in einer negativen Richtung und Aufteilen eines Knotens, der einen Grad größer als 3 besitzt, in dem ersten Pfad; oder Erhöhen eines Gewichts in der positiven Richtung der Verbindung, durch die der erste Pfad verläuft, Negieren des Gewichts in der negativen Richtung der Verbindung, durch die der erste Pfad verläuft, und Unterteilen des Knotens, der einen Grad größer als 3 besitzt, in dem ersten Pfad.

7. Verfahren zum Erhalten eines Pfads nach Anspruch 1, wobei die Pfadinformationen über den ersten Pfad, die durch die Pfadberechnungsdomäne erhalten werden, die an der interaktiven Berechnung teilnimmt, auf wenigstens eine der folgenden Weisen verwirklicht werden:
falls die Pfadberechnungsdomäne nicht die Pfadberechnungsabschlussdomäne ist, berechnet die Pfadberechnungsabschlussdomäne den ersten Pfad zwischen den zwei Endknoten und meldet dann anderen Pfadberechnungsdomänen der Pfadinformationen den ersten Pfad; oder die Pfadberechnungsdomäne, die die Berechnung des zweiten Pfads beginnt, führt die Pfadinformationen über den ersten Pfad in einer Pfadanforderungsnachricht, die zu anderen Pfadberechnungsdomänen zu senden ist; oder die Pfadberechnungsdomäne führt die Pfadinformationen über den ersten Pfad in den Pfadinformationen, um den zweiten Pfad, der zu der nächsten Pfadberechnungsdomäne gesendet wird, zu berechnen; und
falls die Pfadberechnungsdomäne die Pfadberechnungsabschlussdomäne ist, erhält die Pfadberechnungsdomäne die Informationen durch ihre eigene Berechnung.

8. Pfadberechnungssystem, das wenigstens ein erstes Pfadberechnungselement PCE, und ein zweites PCE, die dafür ausgelegt sind, eine interaktive Berechnung auszuführen, um einen Pfad zwischen zwei Endknoten zu erhalten, umfasst, wobei das erste PCE ein PCE einer ersten Pfadberechnungsdomäne ist, das zweite PCE ein PCE einer zweiten Pfadberechnungsdomäne ist und das System **gekennzeichnet ist durch**:
das erste PCE, das dafür ausgelegt ist, Pfadinformationen über einen ersten Pfad und Informationen über eine getrennte Beziehung zwischen einem zu berechnenden zweiten Pfad und dem ersten Pfad zu erhalten, eine Verkehrstechnik-Datenbank der ersten Pfadberechnungsdomäne in Übereinstimmung mit den Pfadinformationen über den ersten Pfad und den Informationen über eine getrennte Beziehung zwischen dem zu berechnenden zweiten Pfad und dem ersten Pfad einzustellen, Pfadinformationen zum Berechnen des zweiten Pfads in Übereinstimmung mit den Pfadinformationen über den ersten Pfad und den Informationen über eine getrennte Beziehung zwischen dem zu berechnenden zweiten Pfad und dem ersten Pfad zu berechnen und zu erzeugen und die erzeugten Pfadinformationen zu einem zweiten PCE zu senden, wobei dann, wenn die Berechnung eines Pfads von einem bestimmten Grenzknoten zu einem Zielknoten scheitert, die Pfadinformationen zum Berechnen des zweiten Pfads Pfadinformationen über einen Pfad zwischen dem bestimmten Grenzknoten und einem Grenzknoten, **durch** den der erste Pfad verläuft, enthalten, wobei der bestimmte Grenzknoten und ein Grenzknoten, **durch** den der erste Pfad verläuft, mit der zweiten Pfadberechnungsdomäne verbunden sind; und
das zweite PCE, das dafür ausgelegt ist, die Pfadinformationen über den ersten Pfad und die Informationen über eine getrennte Beziehung zwischen dem zu berechnenden zweiten Pfad und dem ersten Pfad zu erhalten, den zweiten Pfad in Übereinstimmung mit den erhaltenen Pfadinformationen über den ersten Pfad, den Informationen über eine getrennte Beziehung zwischen dem zu berechnenden zweiten Pfad und dem ersten Pfad und den **durch** das erste PCE gesendeten Pfadinformationen zu berechnen.

## Revendications

1. Procédé d'obtention d'un chemin, comprenant :
l'exécution, par au moins deux domaines de calcul de chemin entre un domaine initial de calcul de chemin et un domaine terminal de calcul de chemin, d'un calcul interactif pour obtenir un chemin entre deux noeuds d'extrémité, **caractérisé par** :
l'obtention, par au moins l'un des domaines de calcul de chemin, d'informations de chemin relatives à un premier chemin et d'informations de relation de séparation entre un second chemin à calculer et le premier chemin ;
le réglage, par l'au moins un des domaines de calcul de chemin, d'une base de données technique de trafic de l'au moins un des domaines de calcul de chemin en fonction d'informations de chemin relatives au premier chemin et des informations de relation de séparation entre le second chemin à calculer et le premier chemin ;
le calcul, par l'au moins un des domaines de calcul de chemin, d'informations de chemin pour calculer le second chemin en fonction des informations de chemin relatives au premier chemin et des informations de relation de séparation entre le second chemin à calculer et le premier chemin, dans lequel si le calcul d'un chemin depuis un certain noeud limitrophe jusqu'à un noeud destinataire échoue, les informations de chemin générées pour calculer le second chemin comprennent des informations de chemin relatives à un chemin entre le certain noeud limitrophe et un noeud limitrophe par lequel passe le premier chemin, le certain noeud limitrophe et un noeud limitrophe par lequel passe le premier chemin se connectant à un domaine de calcul de chemin antérieur ; et
l'envoi, par l'au moins un des domaines de calcul de chemin, des informations de chemin générées à un domaine de calcul de chemin antérieur.

2. Procédé d'obtention d'un chemin selon la revendication 1, comprenant en outre, après l'obtention du premier chemin et du second chemin par le calcul interactif :
la détermination que le premier chemin et le second chemin ont ou non une partie chevauchante ; et
si le premier chemin et le second chemin ont une partie chevauchante, le réglage de la partie chevauchante du premier chemin et du second chemin, de manière à obtenir deux chemins séparés ou à séparer.

3. Procédé d'obtention d'un chemin selon la revendication 1, dans lequel le premier chemin est le chemin le plus court, et le second chemin est le chemin le plus court autre que le premier chemin.

4. Procédé d'obtention d'un chemin selon la revendication 1, dans lequel les informations de relation de séparation entre le second chemin à calculer et le premier chemin indiquent :
que le second chemin est séparé par noeud, ou séparé par liaison, ou à séparer par noeud ou à séparer par liaison du premier chemin.

5. Procédé d'obtention d'un chemin selon la revendication 4, dans lequel quand les informations de relation de séparation entre le second chemin à comparer et le premier chemin indiquent que le second chemin est séparé par liaison ou est à séparer par liaison du premier chemin, le réglage de la base de données technique de trafic de l'au moins un des domaines de calcul de chemin comprend spécifiquement :
l'exclusion d'un sens positif d'une liaison par laquelle passe le premier chemin, et la négation d'un poids dans un sens négatif ; ou l'augmentation d'un poids dans le sens positif de la liaison par laquelle passe le premier chemin, et la négation du poids dans le sens négatif de la liaison par laquelle passe le premier chemin.

6. Procédé d'obtention d'un chemin selon la revendication 4, dans lequel, quand les informations de relation de séparation entre le second chemin à calculer et le premier chemin indiquent que le second chemin est séparé par noeud ou est à séparer par noeud du premier chemin, le réglage de la base de données technique de trafic de l'au moins un des domaines de calcul de chemin comprend spécifiquement :
l'exclusion d'un sens positif d'une liaison par laquelle passe le premier chemin, la négation d'un poids dans un sens négatif, et la division d'un noeud ayant un degré supérieur à 3 dans le premier chemin ; ou l'augmentation d'un poids dans le sens positif de la liaison par laquelle passe le premier chemin, et la négation du poids dans le sens négatif de la liaison par laquelle passe le premier chemin, et la division du noeud ayant un degré supérieur à 3 dans le premier chemin.

7. Procédé d'obtention d'un chemin selon la revendication 1, dans lequel les informations de chemin relatives au premier chemin obtenues par le domaine de calcul de chemin participant au calcul interactif sont réalisées selon l'une des manières suivantes :
si le domaine de calcul de chemin n'est pas le domaine terminal de calcul de chemin, le domaine terminal de calcul de chemin calcule le premier chemin entre les deux noeuds d'extrémité, puis notifie à d'autres domaines de calcul de chemin les informations de chemin relatives au premier chemin ; ou le domaine de calcul de chemin lançant le calcul du second chemin inclut les informations de chemin relatives au premier chemin dans un message de requête de chemin à envoyer à d'autres domaines de calcul de chemin ; ou le domaine de calcul de chemin inclut les informations de chemin relatives au premier chemin dans les informations de chemin pour calculer le second chemin envoyées au domaine de calcul de chemin suivant ; et
si le domaine de calcul de chemin est le domaine terminal de calcul de chemin, le domaine de calcul de chemin obtient les informations par son propre calcul.

8. Système de calcul de chemin, comprenant au moins un premier élément de calcul de chemin, PCE, et un second PCE adapté pour exécuter un calcul interactif afin d'obtenir un chemin entre deux noeuds d'extrémité, le premier PCE est un PCE d'un domaine de calcul de premier chemin, le second PCE est un PCE d'un domaine de calcul de second chemin, le système étant **caractérisé en ce que** :
le premier PCE, adapté pour obtenir des informations de chemin relatives à un premier chemin et des informations de relation de séparation entre un second chemin à calculer et le premier chemin, règle une base de données technique de trafic du domaine de calcul de premier chemin en fonction d'informations de chemin relatives au premier chemin et des informations de relation de séparation entre le second chemin à calculer et le premier chemin, calculer et générer des informations de chemin pour calculer le second chemin en fonction des informations de chemin relatives au premier chemin et des informations de relation de séparation entre le second chemin à calculer et le premier chemin, et envoyer les informations de chemin générées à un second PCE, dans lequel si le calcul d'un chemin depuis un certain noeud limitrophe jusqu'à un noeud destinataire échoue les informations de chemin pour calculer le second chemin comprennent des informations de chemin relatives à un chemin entre le certain noeud limitrophe et un noeud limitrophe par lequel passe le premier chemin, le certain noeud limitrophe et un noeud limitrophe par lequel passe le premier chemin se connectant au domaine de calcul de second chemin ; et
le second PCE, adapté pour obtenir les informations de chemin relatives au premier chemin et les informations de relation de séparation entre le second chemin à calculer et le premier chemin, calculent le second chemin en fonction des informations de chemin obtenues relatives au premier chemin, des informations de relation de séparation entre le second chemin à calculer et le premier chemin et des informations de chemin envoyées par le premier PCE.
